# EUROPEAN PATENT APPLICATION

(11) **EP 1 746 308 A1**
(43) Date of publication of application: **24.01.2007**
(21) Application number: 05015977.1
(22) Date of filing: 22.07.2005
(51) Int. Cl.: F16H 55/30

(54) **Cushioning mechanism for sprocket of all terrain vehicles**

(71) Applicant: Kwang Yang Motor Co., Ltd., Kaohsiung City (TW)
(72) Inventor: Shao, Chien-Neng, 48 Regent St. Cambridge CB2 1FD (GB); Lee, Yen-Hsiu, 48 Regent St. Cambridge CB2 1FD (GB)
(74) Representative: Horak, Michael

(57) **Abstract**

A cushioning mechanism for a sprocket (3) of an all terrain vehicle which includes: a sprocket (3) and a fixed seat (4), wherein the sprocket (3) has a first side and a second side, the first side is provided with a plurality of tubular members (32) in each of which is fitted a bushing (5), and the fixed seat (4) is mounted on the second side of the sprocket (3) by fasteners (5) extending through the fixed seat (4) and the bushing (5) to engage with nuts (S1), whereby when the all terrain vehicle travels on rough terrain, the bushing (5) will effectively absorb impact to the sprocket (3) thereby preventing the sprocket (3) from either pulling a chain to make it longer or even breaking the chain.

## Description

### BACKGROUND OF THE INVENTION

### (a) Technical Field of the Invention

The present invention relates to a cushioning mechanism for a sprocket of an all terrain vehicle and in particular to one which utilizes bushings to protect a sprocket from being damaged.

### (b) Description of the Prior Art

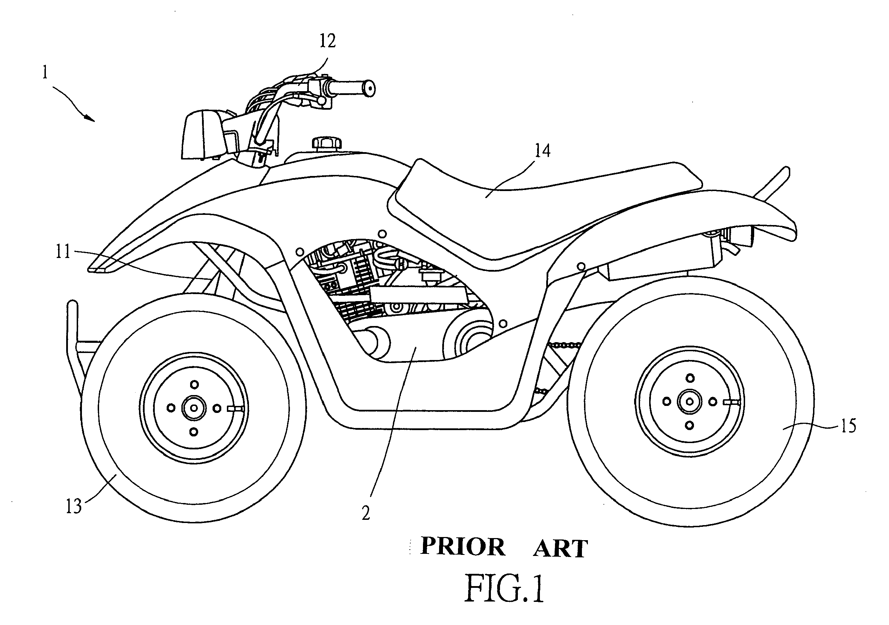

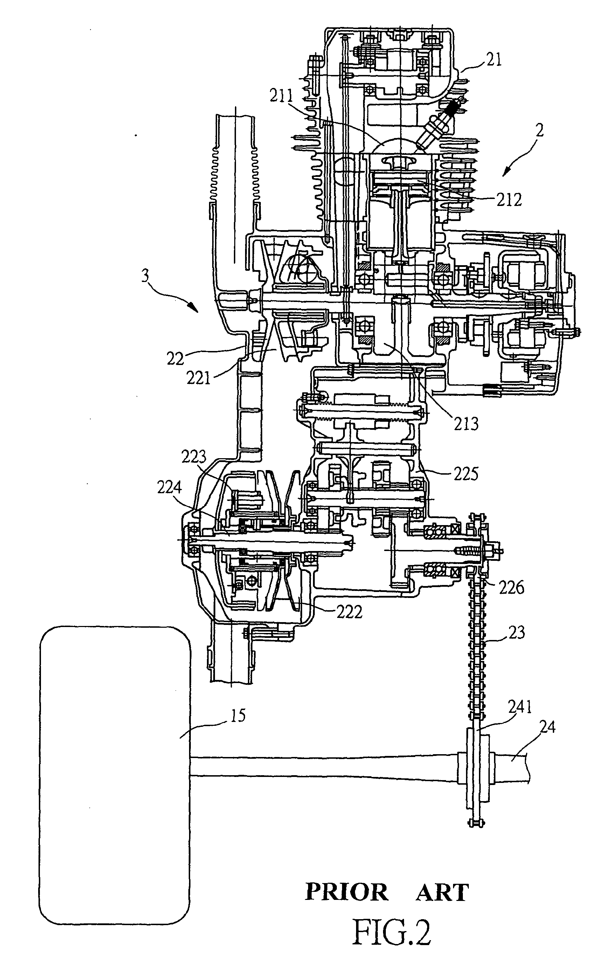

Referring to FIG 1, the conventional all terrain vehicle 1 according to the present invention includes a frame 11, a steering mechanism 12, front wheels 13, a seat 14, rear wheels 15, and a power unit 2. The front portion of the frame 11 is pivotally connected with the steering mechanism 12 under which are mounted the front wheels 13. The seat 14 is arranged behind the steering mechanism 12 and on the frame 11. The power unit 2 is installed under the seat 14. As shown in FIG 2, the power unit 2 includes an engine 21 and a stepless transmission 22 driven by the engine 21 and driving a rear axle 24 via a chain 23. The rear wheels 15 are drivingly connected with the rear axle 24.

As shown in FIG 2, the fuel is first mixed with fresh air and then transmitted to a combustion chamber 211 of the engine 21 to generate power thereby causing a piston 212 to reciprocate and therefore rotating a crankshaft 213. Then, the crankshaft 213 will drive the driving disc 221 of the stepless transmission 22 to rotate thereby driving the driven disc 222. By means of the clutch 223, the driven axle 224 will be rotated, which will in turn drive the final toothed disc 226 to rotate via the final gear set 225. Thereafter, the final toothed disc 226 will drive the sprocket 241 on the rear wheel axle 24 via the chain 23 thus causing the all terrain vehicle 1 to travel.

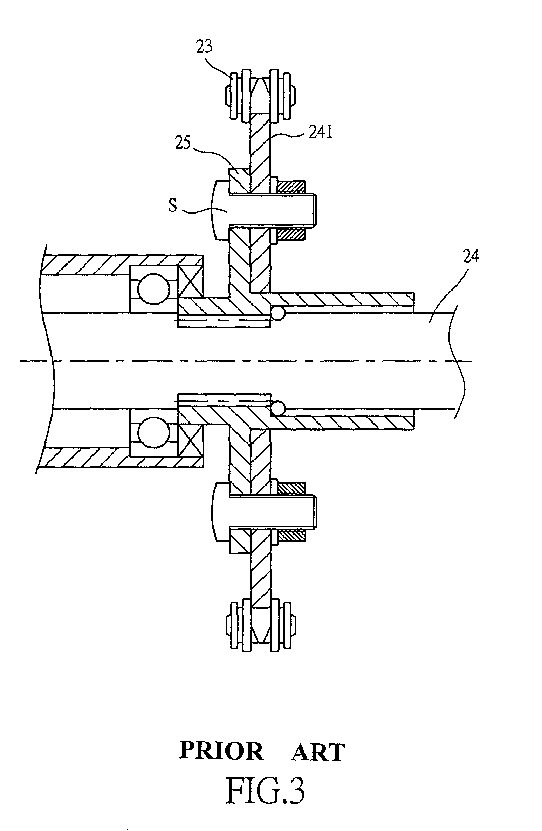

In order for the terrain vehicle 1 to accelerate forward or upwards at the moment of impact as it touches ground, the accelerator must be fully pressed to further increase the performance of the output torque of the engine. The conventional sprocket 241 is directly mounted on a fixed seat 25 by fasteners S. As shown in FIG 3, when the all terrain vehicle touches the ground, due to the gravitational force and the function of the shock absorber, the chain 23 between the sprocket 241 and the final toothed disc 226 will be in a tensioned condition. Furthermore, the engine will output larger power and torque when the accelerator is pressed, the chain 23 and the sprocket 241 will be subject to a large torque thus probably pulling the chain 23 away the sprocket 241. As a consequence, the chain 23 and the sprocket 241 will even be broken or damaged thereby seriously influencing the safety of the all terrain vehicle.

Therefore, it is object of the present invention to provide a cushioning mechanism for a sprocket of an all terrain vehicle which can obviate and mitigate the above-mentioned drawbacks.

### SUMMARY OF THE INVENTION

The primary object of the present invention is to provide a cushioning mechanism for a sprocket of an all terrain vehicle which includes: a sprocket and a fixed seat, wherein the sprocket has a first side and a second side, the first side is provided with a plurality of tubular members in each of which is fitted a bushing, and the fixed seat is mounted on the second side of the sprocket by fasteners extending through the fixed seat and the bushing to engage with nuts, whereby when the all terrain vehicle travels on rough terrain, the bushing will effectively absorb impact to the sprocket thereby preventing the sprocket from either pulling a chain to make it longer or even breaking the chain.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG. 1 is a side view of a prior art all terrain vehicle;
FIG. 2 is a sectional view of a prior art transmission mechanism for all terrain vehicles;
FIG. 3 is a sectional view of a sprocket of the prior art transmission mechanism for all terrain vehicles;
FIG. 4 is an exploded view of a cushioning mechanism for a sprocket of all terrain vehicles according to the present invention;
FIG. 5 is a sectional view illustrating the engagement between the cushioning device and the sprocket according to the present invention;
FIG. 6 is an exploded view of a cushioning mechanism for a sprocket of all terrain vehicles according to a second preferred embodiment of the present invention;
FIG. 7 is an exploded view of a cushioning mechanism for a sprocket of all terrain vehicles according to a third preferred embodiment of the present invention;
FIG. 8 is a sectional view of the cushioning device shown in FIG. 7;
FIG. 9 is an exploded view of a cushioning mechanism for a sprocket of all terrain vehicles according to a fourth preferred embodiment of the present invention;
FIG. 10 is a sectional view of the cushioning mechanism shown in FIG. 9;
FIG. 11 is an exploded view of a cushioning mechanism for a sprocket of all terrain vehicles according to a fifth preferred embodiment of the present invention;
FIG. 12 is a sectional view of the cushioning mechanism shown in FIG. 11;
FIG. 13 is an exploded view of a cushioning mechanism for a sprocket of all terrain vehicles according to a sixth preferred embodiment of the present invention; and
FIG. 14 is a sectional view of the cushioning mechanism shown in FIG. 13.

### DETAILED DESCRIPTION OF THE PREFERRED EMBODIMENT

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

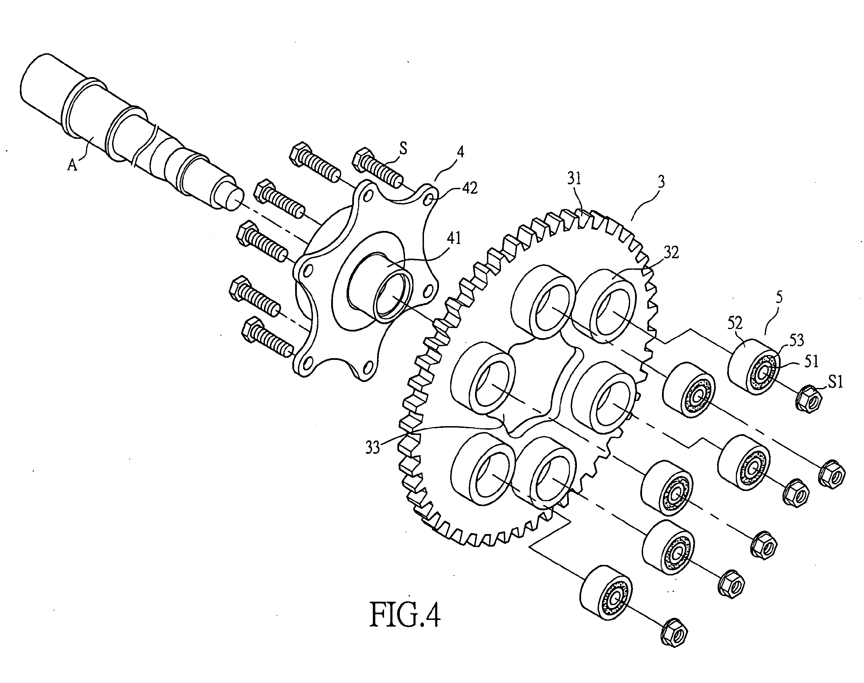

With reference to the drawings and in particular to FIG. 4 thereof, the cushioning mechanism for a sprocket of all terrain vehicles comprises a sprocket 3, a fixed seat 4, a plurality of bushings 5 and a plurality of fasteners S.

The sprocket 3 is provided with a plurality of teeth 31 adapted to engage with a chain 23 (see FIG. 2). One side of the sprocket 3 has a plurality of tubular members 32 and a through opening 33 at the center.

The fixed seat 3 is mounted on the other side of the sprocket 3 and has a tubular portion 41 at the center. The tubular portion 41 is designed for the passage of a rear wheel axle A. The fixed seat 3 has a plurality of fixing holes 42 in alignment with the tubular members 32 of the sprocket 3.

The bushing 5 is a cylindrical member having an outer layer 52 made of metal, an inner layer 51 made of metal, and an intermediate layer 53 made of resilient material such as rubber. The outer layer 52, the inner layer 51 and the intermediate layer 53 are concentric to each other.

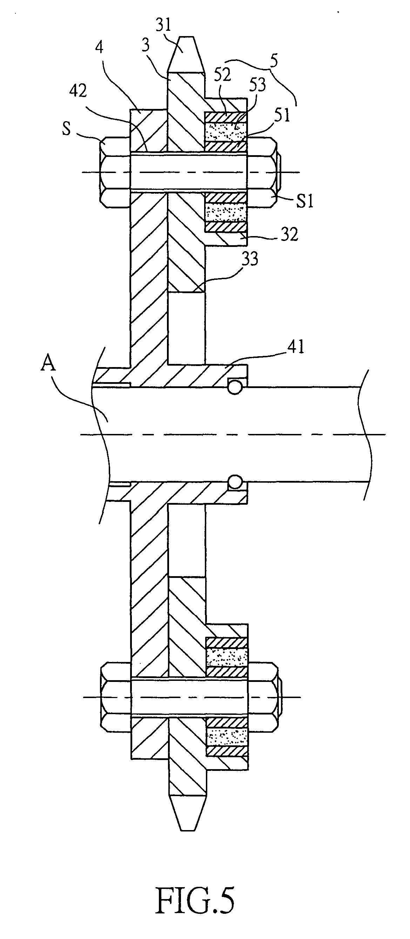

As depicted in FIG. 5, when in assembly, the bushings 5 are first fitted into the tubular members of the sprocket 3 and the tubular portion 41 of the fixed seat 4 is inserted into the opening 33 of the sprocket 3. Then, the fixing holes 42 are aligned with the tubular members 32 of the sprocket 3 and the fasteners S are inserted into the fixing holes 42 of the fixed seat 4 and the bushings 5 to engage with nuts S1.

When the all terrain vehicle equipped with the cushioning mechanism according to the present invention travels on rough terrain, the intermediate layer 53 of the bushing 5 which is made of resilient material will effectively absorb the impact to the sprocket 3 S thereby preventing the sprocket 3 from pulling the chain to make it longer or even breaking the chain.

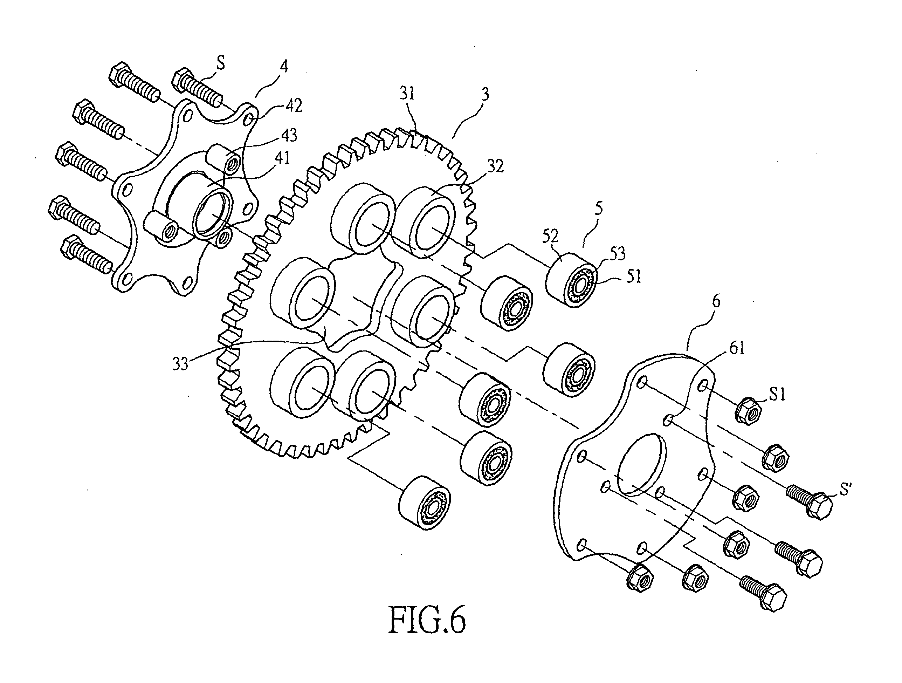

FIG. 6 is an exploded view of a cushioning mechanism for a sprocket of all terrain vehicles according to a second preferred embodiment of the present invention. As shown, the fixed plate 4 is mounted on one side of the sprocket 3 while a reinforced plate 6 is installed on the other side of the sprocket 3. The reinforced plate 6 is formed with a plurality of holes 61 and the fixed plate 4 is provided with a plurality of internally threaded projections 43 extending through the opening 33 of the sprocket 3 to align with the holes 61 of the reinforced plate 6, so that a plurality of fasteners S' can be inserted through the holes 61 to engage with the internally threaded projections 43 thereby protecting the fasteners S from being damaged.

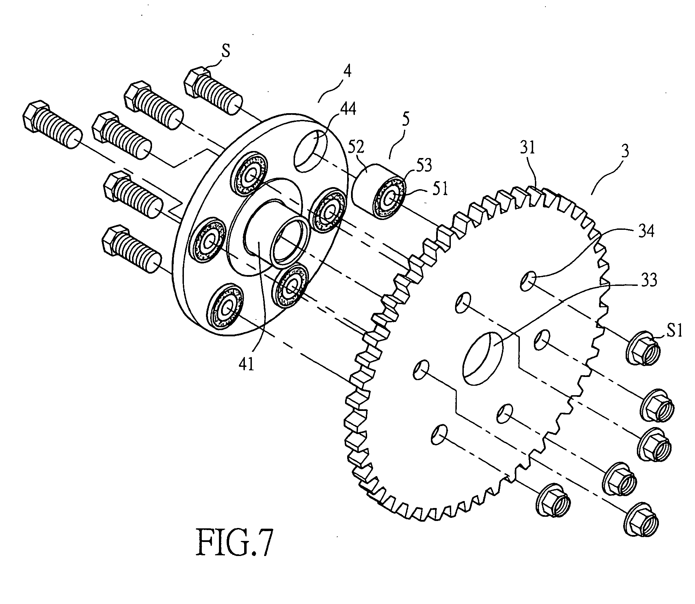

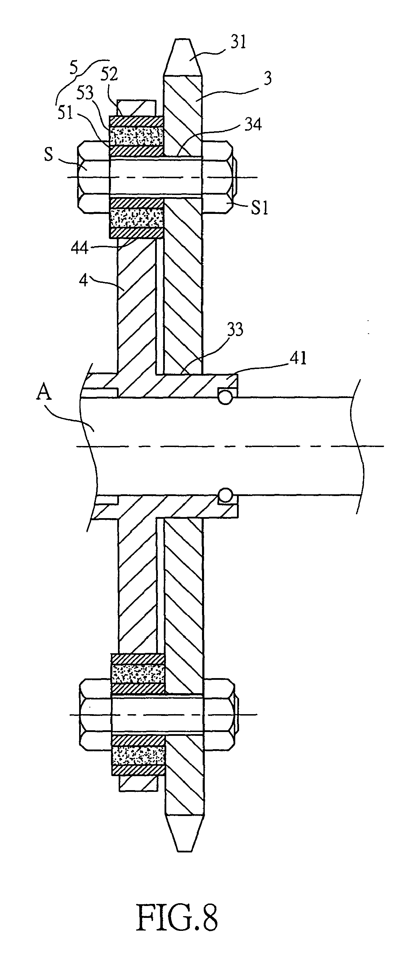

FIGS. 7 and 8 illustrate a third preferred embodiment of the present invention. As shown, the fixed seat 4 is formed with a plurality of recesses 44 in each of which is fitted a bushing 5. The sprocket 3 has a plurality of locking holes 34. A plurality of fasteners S extend through the bushings 5 and the locking holes 34 to engage with nuts S1 thereby affixing the fixed seat 4 to the sprocket 3.

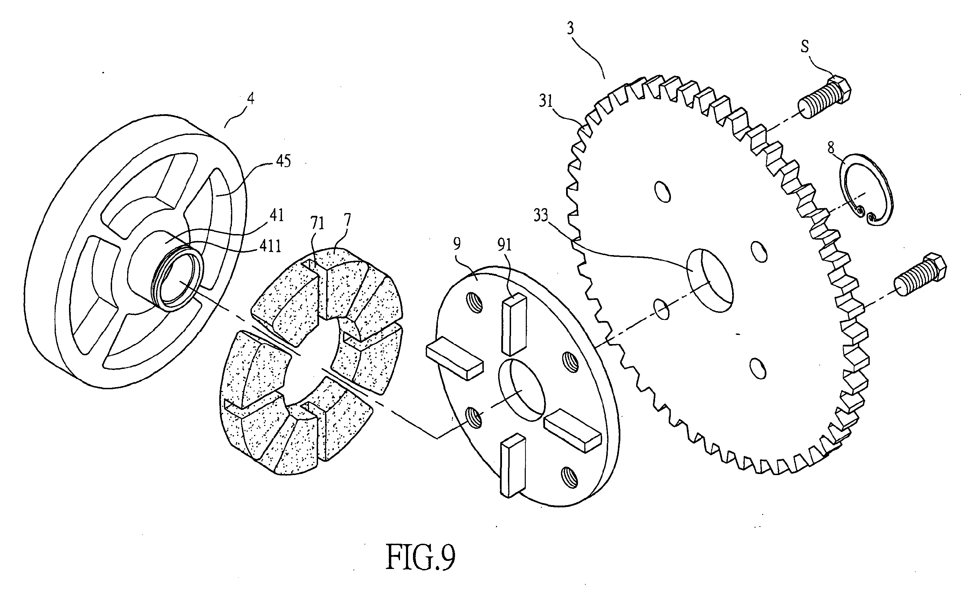

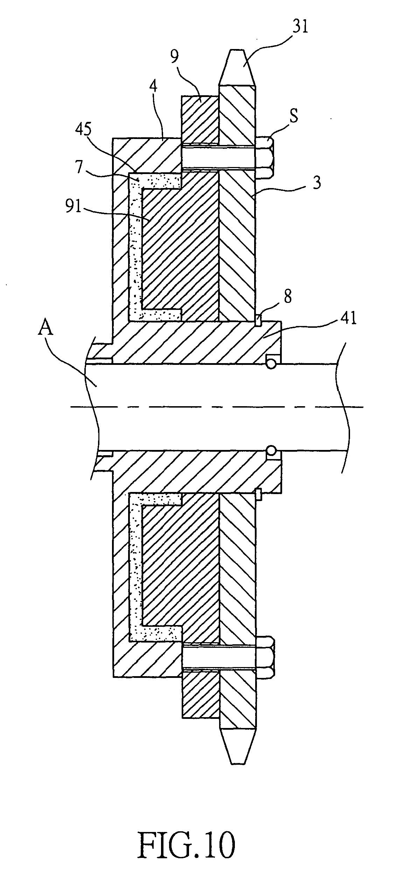

FIG 9 is an exploded view of a cushioning mechanism for a sprocket of all terrain vehicles according to a fourth preferred embodiment of the present invention. As shown, the fixed seat 4 is provided with a plurality of cavities 45 in each of which is fitted a rubber member 7. The rubber member 7 has a radial slot 71 at the intermediate portion. The fixed seat 4 has a tubular portion 41 at the center which is formed with an annular groove 411. A clamping plate 9 is fastened on the sprocket 3 by fasteners S and positioned between the fixed plate 4 and the sprocket 3. The clamping plate 9 is provided with a plurality of radial projections 91 fitted in the slot 71 of the rubber member 7. Referring to FIG 10, when in assembly, the rubber members 7 are first fitted into the cavities 45 and the clamping plate 9 is fixedly mounted on the sprocket 3 by fasteners S. Then, the fixed plate 4 is engaged with the clamping plate 9, with the projections 91 fitted into the slots 71 of the rubber members 7 and the tubular portion 41 extending through the center hole (shown but not numbered) of the clamping plate 9 and the center hole 33 of the sprocket 3. Finally, a C-shaped retainer 8 is engaged with the annular groove 411 of the tubular portion 41 of the fixed seat 4 thus affixing the fixed seat 4 to the sprocket 3. By means of the projections 91, the sprocket 3 can drive the fixed seat 4 and a rear wheel axle to rotate. When the all terrain vehicle equipped with the cushioning mechanism according to the present invention travels on rough terrain, the rubber members 7 will absorb the impact to the sprocket 3 thereby preventing the sprocket 3 from either pulling the chain to make it longer or even breaking the chain.

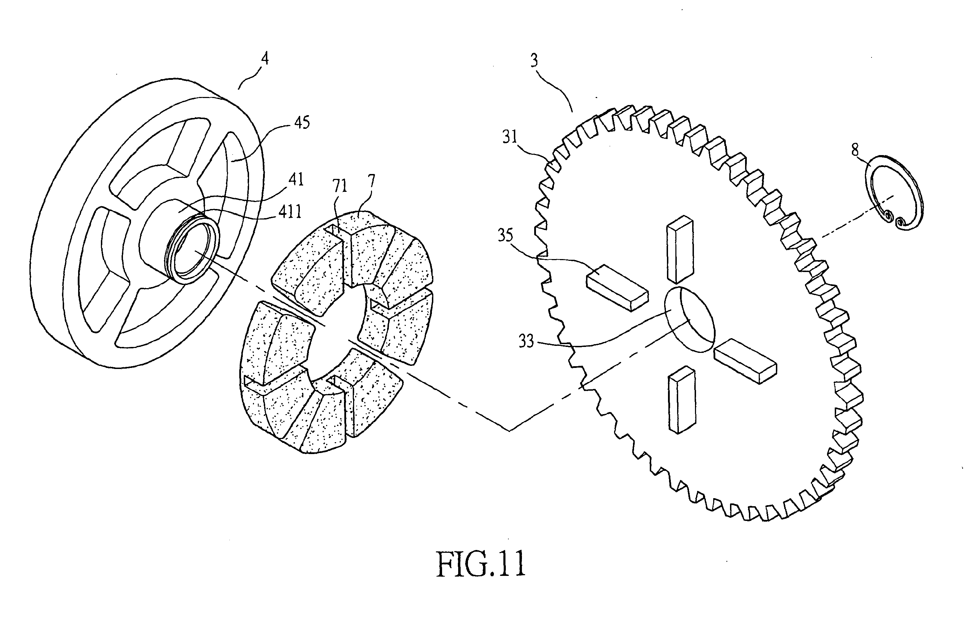

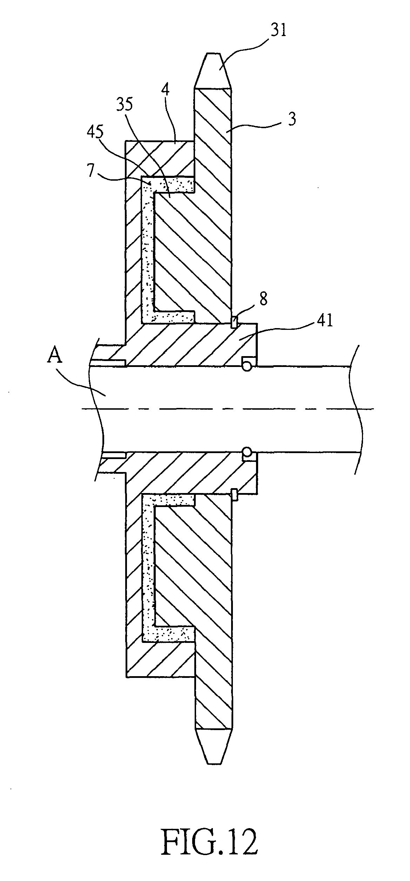

FIGS. 11 and 12 illustrate a cushioning mechanism for a sprocket of all terrain vehicles according to a fifth preferred embodiment of the present invention. As illustrated, the fixed seat 4 is formed with a plurality of cavities 45 each in of which is fitted a rubber member 7 having a radial slot 71. The fixed seat 4 has a tubular portion 41 at the center which is formed with an annular groove 411. The sprocket 3 is provided with a plurality of radial projections 35 adapted to be fitted into the slot 71 of the rubber member 7. When in assembly, the rubber members 7 are first fitted into the cavities 45 of the fixed seat 4 and the fixed seat 4 is engaged with the sprocket 3, with the grooves 71 of the former receiving the projections 35 of the latter. Further, the tubular portion 41 of the fixed seat 4 extend through the center hole 33 of the sprocket 3 to engage with a C-shaped retainer 8. When the all terrain vehicle equipped with the cushioning mechanism according to the present invention travels on rough terrain, the rubber members 7 will absorb the impact to the sprocket 3 thereby preventing the sprocket 3 from either pulling the chain to make it longer or even breaking the chain.

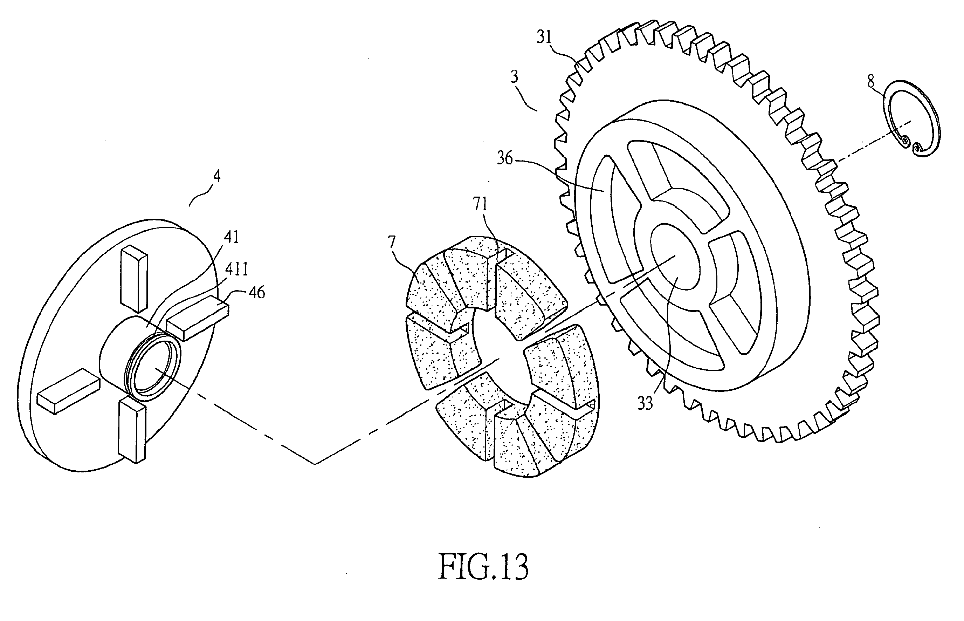

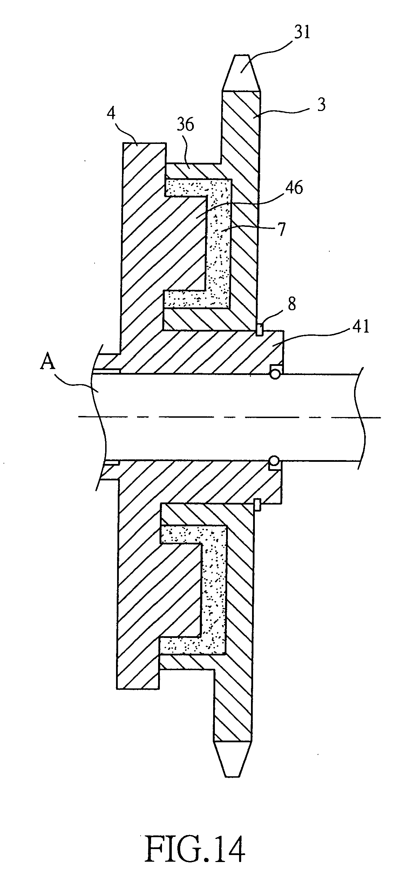

FIGS. 13 and 14 illustrate a cushioning mechanism for a sprocket of all terrain vehicles according to a sixth preferred embodiment of the present invention. As can be seen, the sprocket 3 is provided with a plurality of cavities 36 in each of which is fitted a resilient member 7 provided with a radial slot 71. The fixed seat 4 has a plurality of radial projections 46 each of which is configured to be fitted into a respective slot 71 of the resilient member 7. Further, a tubular portion 41 provided with an annular groove 411 extends from the center of the fixed seat 4. When in assembly, the resilient members 7 are first fitted into the cavities 36 of the sprocket 3 and the fixed seat 4 is engaged with the sprocket 3, with the projections 46 of the former fitted into the cavities 36 of the latter. Meanwhile, the tubular portion 41 of the fixed seat 4 extends through the center hole 33 of the sprocket 3 to engage with a C-shaped retainer 8. When the all terrain vehicle equipped with the cushioning mechanism according to the present invention travels off roads, the resilient members 7 will absorb the impact to the sprocket 3 thereby preventing the sprocket 3 from pulling the chain to make it longer or even breaking the chain.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A cushioning mechanism for a sprocket of an all terrain vehicle comprising: a sprocket and a fixed seat, wherein said sprocket has a first side and a second side, said first side is provided with a plurality of tubular members in each of which is fitted a bushing, and said fixed seat is mounted on said second side of said sprocket by fasteners extending through said fixed seat and said bushing to engage with nuts, whereby when the all terrain vehicle travels on rough terrain, said bushing will effectively absorb impact to said sprocket thereby preventing said sprocket from pulling a chain to make it longer or even breaking the chain.

2. The cushioning mechanism for a sprocket of an all terrain vehicle as claimed in claim 1, wherein said bushing has an inner layer made of metal, an outer layer made of metal, and an intermediate layer arranged between said inner and outer layers and made of resilient material.

3. The cushioning mechanism for a sprocket of an all terrain vehicle as claimed in claim 1, wherein said fixed seat is provided with a plurality of internally threaded projections and a reinforced plate is arranged between said second side of said sprocket by fasteners extending through said reinforced plate to engage with said internally threaded projections.

4. A cushioning mechanism for a sprocket of an all terrain vehicle. comprising: a sprocket and a fixed seat, wherein said fixed seat is provided with a plurality of recesses in each of which is fitted a bushing, and said fixed seat is mounted on said sprocket by fasteners extending through said bushing and said sprocket to engage with nuts, whereby when the all terrain vehicle travels on rough terrain, said bushing will effectively absorb impact to said sprocket thereby preventing said sprocket from pulling a chain to make it longer or even breaking the chain.

5. The cushioning mechanism for a sprocket of an all terrain vehicle as claimed in claim 4, wherein said fixed seat is provided with a plurality of internally threaded projections and a reinforced plate is arranged between said second side of said sprocket by fasteners extending through said reinforced plate to engage with said internally threaded projections.

6. A cushioning mechanism for a sprocket of an all terrain vehicle comprising: a sprocket and a fixed seat, wherein said fixed seat has a plurality of cavities in each of which is fitted a rubber member having a slot, a clamping plate is mounted on said sprocket by fasteners and positioned between said fixed seat and said sprocket, said clamping plate has a plurality of projections adapted to be fitted in said slot, said fixed seat having a tubular portion having an annular groove, said tubular portion extending through said clamping plate and said sprocket to engage with a retainer, whereby when the all terrain vehicle travels on rough terrain, said rubber member will effectively absorb impact to said sprocket thereby preventing said sprocket from either pulling a chain to make it longer or even breaking the chain.

7. A cushioning mechanism for a sprocket of an all terrain vehicle comprising: a sprocket and a fixed seat, wherein said sprocket has a plurality of cavities in each of which is fitted a rubber member having a slot, said fixed seat has a plurality of projections adapted to be fitted in said slot, said fixed seat having a tubular portion having an annular groove, said tubular portion extending through said sprocket to engage with a retainer, whereby when the all terrain vehicle travels on rough terrain, said rubber member will effectively absorb impact to said sprocket thereby preventing said sprocket from either pulling a chain to make it longer or even breaking the chain.
